# FASCICULE DE BREVET EUROPEEN

(11) **EP 2 239 162 B1**
(45) Date de publication et mention de la délivrance du brevet: **11.07.2012**
(21) Numéro de dépôt: 10305345.0
(22) Date de dépôt: 02.04.2010
(51) Int. Cl.: B60P 7/08, B64D 11/06

(54) **Dispositif d'accouplement à un rail avec faculté de déplacement longitudinal**
Kupplungsvorrichtung an einer Schiene mit Längsverschiebungsmöglichkeit
Rail coupling device which can be translated longitudinally

(30) Priorité: 06.04.2009 FR 0952245
(43) Date de publication de la demande: 13.10.2010
(73) Titulaire: Daouk, Antar, 75016 Paris (FR)
(72) Inventeur: Daouk, Antar, 75016 Paris (FR)
(74) Mandataire: Weber, Jean-François

(56) Documents cités:
- DE-A1-102006 022 032
- FR-A1- 2 912 993
- GB-A- 2 426 549
- US-A- 4 936 527
- US-A- 5 871 318

## Description

La présente invention se rapporte au domaine technique général des dispositifs d'accouplement permettant d'attacher de façon amovible un équipement à un rail lui-même embarqué dans un véhicule. En particulier, la présente invention est relative au domaine de l'accouplement rapide d'équipements (tels que des sièges, des éléments de cuisine de bord, etc.) à des rails fixés dans des aéronefs tels que les hélicoptères ou les avions. Un dispositif de l'art antérieur est décrit dans le document GB 2426549.

La présente invention concerne plus particulièrement un dispositif d'accouplement à un rail embarqué dans un véhicule, ledit dispositif comprenant un moyen d'attache capable d'évoluer entre d'une part une configuration d'attache dans laquelle le moyen d'attache est conçu pour attacher le dispositif d'accouplement au rail et d'autre part une configuration de libération dans laquelle il est conçu pour autoriser la séparation desdits dispositif d'accouplement et rail.

Il est connu d'équiper les aéronefs de rails permettant l'attache réversible et rapide d'équipements de bord (par exemple : sièges, chariots, nacelles, civières, etc.). La conception de tels rails répond à des normes internationales, de sorte que ces rails sont standardisés, au moins dans leur forme générale. Ces rails comportent ainsi habituellement une paroi d'attache qui s'étend longitudinalement au sommet du rail, ladite paroi d'attache présentant une face interne située en vis-à-vis du plancher auquel est assujetti le rail et une face externe opposée. Une ouverture est ménagée à travers la paroi d'attache de manière à traverser cette dernière entre les faces interne et externe selon une direction de perçage correspondant généralement à la direction verticale.

L'ouverture s'étend longitudinalement selon la direction principale d'extension du rail, et affecte donc la forme d'une fente. La section de cette fente est constante, à l'exception de portions localisées positionnées à intervalles réguliers et qui présentent une section circulaire agrandie. Ces portions de section agrandies sont souvent désignées dans le domaine technique par l'appellation « *alvéole ».* Il existe dans l'art antérieur différents dispositifs d'accouplement permettant de solidariser un équipement à un rail conforme à la description qui précède. On connaît en particulier un dispositif d'accouplement comprenant une embase sur laquelle sont montées :
- une pièce de blocage horizontal, destinée à être introduite dans une alvéole du rail pour empêcher tout mouvement du dispositif d'accouplement dans le plan d'extension du rail,
- une pièce de blocage vertical, montée mobile en translation longitudinale sur le dispositif d'accouplement pour venir coincer le rail. Compte tenu des contraintes mécaniques particulières (vibrations) auxquelles est soumis l'accouplement au sein d'un aéronef, il est nécessaire de prévoir un assujettissement ferme du dispositif d'accouplement sur le rail. A cette fin, la pièce de blocage vertical est conçue pour subir, à la fin de son déplacement en translation longitudinale, un déplacement à composante verticale de manière à ce qu'elle vienne presser la face interne de la paroi d'attache du rail, pour réaliser ainsi une connexion mécanique ferme entre le rail et le dispositif d'accouplement.

Le fonctionnement de ce dispositif connu est le suivant. L'embase est rapportée contre et sur la paroi d'attache, de manière à ce que les pièces de blocage horizontal et vertical pénètrent dans des alvéoles correspondantes. Le dispositif d'accouplement est à cet instant bloqué en translation horizontale. La pièce de blocage vertical est soumise ensuite à un déplacement longitudinal avant relativement à l'embase, selon une amplitude correspondant à la moitié du diamètre d'une alvéole. Cela permet d'introduire un décalage entre la pièce de blocage vertical et l'alvéole qui permet de verrouiller verticalement le dispositif d'accouplement au rail. La pièce de blocage vertical est enfin soumise à un déplacement vertical (vers le haut) pour procurer un effet anti-vibrations comme évoqué plus haut. Ce dispositif d'accouplement permet ainsi au personnel chargé de l'aménagement de l'avion de positionner différents équipements (siège, chariot, éléments de cuisine de bord, etc.) en des positions choisies le long du rail, pour tenir compte des contraintes d'exploitation de l'aéronef sur le plancher duquel sont assujettis les rails.

Ces dispositifs d'accouplement de l'art antérieur présentent cependant certains inconvénients.

En particulier, il est extrêmement malaisé pour le personnel en charge de l'aménagement de la cabine de procéder à des ajustements de la position longitudinale du dispositif d'accouplement (et de l'équipement qu'il porte) sur le rail. En effet, un changement de position longitudinale du dispositif d'accouplement relativement au rail nécessite de mettre en oeuvre différentes opérations fastidieuses, délicates, voire même pénibles physiquement selon le poids de l'équipement concerné. Ces opérations consistent notamment en un déplacement vertical (vers le bas) puis longitudinal arrière de la pièce de blocage vertical, pour libérer le dispositif d'accouplement selon la direction verticale, suivie du soulèvement du dispositif d'accouplement par l'opérateur (ce qui implique également le cas échéant de soulever l'équipement associé, qui peut être très lourd) pour désengager complètement le dispositif d'accouplement hors du rail, puis du portage par l'utilisateur (voire par plusieurs utilisateurs en fonction du poids de l'équipement concerné) du dispositif d'accouplement jusqu'à la nouvelle position souhaitée.

Ces dispositifs d'accouplement de l'art antérieur sont donc longs et pénibles à manoeuvrer, ce qui constitue un handicap sérieux au regard des contraintes d'exploitation des aéronefs, qui impliquent de modifier de façon fréquente et importante l'agencement intérieur des cabines.

En outre, la conception de ces dispositifs de l'art antérieur est relativement complexe et coûteuse en regard du niveau de fonctionnalité qu'ils procurent.

Les objets assignés à l'invention visent par conséquent à porter remède aux inconvénients de l'art antérieur exposés dans ce qui précède et à proposer un nouveau dispositif d'accouplement qui, tout en étant de conception particulièrement simple, fiable et bon marché, permet à un utilisateur de procéder facilement et rapidement à un ajustement précis de la position longitudinale du dispositif d'accouplement sur le rail correspondant.

Un autre objet de l'invention vise à proposer un nouveau dispositif d'accouplement qui permet à un utilisateur de déplacer aisément, sans effort, le dispositif d'accouplement le long du rail.

Un autre objet de l'invention vise à proposer un nouveau dispositif d'accouplement de construction particulièrement simplifiée et compacte.

Un autre objet de l'invention vise à proposer un nouveau dispositif d'accouplement particulièrement robuste.

Un autre objet de l'invention vise à proposer un nouveau dispositif d'accouplement dont la conception permet de limiter les efforts physiques à exercer par l'utilisateur.

Un autre objet de l'invention vise à proposer un nouveau dispositif d'accouplement de construction particulièrement fiable et bon marché.

Un autre objet de l'invention vise à proposer un nouveau dispositif d'accouplement qui permet un accouplement particulièrement stable et robuste.

Un autre objet de l'invention vise à proposer un nouveau dispositif d'accouplement facile et intuitif à utiliser.

Un autre objet de l'invention vise à proposer un nouveau dispositif d'accouplement capable d'être adapté à des rails de différentes dimensions.

Les objets assignés à l'invention sont atteints à l'aide d'un dispositif d'accouplement à un rail embarqué dans un véhicule, ledit dispositif comprenant :
- un moyen d'attache capable d'évoluer entre d'une part une configuration d'attache dans laquelle le moyen d'attache est conçu pour attacher le dispositif d'accouplement au rail et d'autre part une configuration de libération dans laquelle il est conçu pour autoriser la séparation desdits dispositif d'accouplement et rail,
- un organe de support conçu pour évoluer entre d'une part une configuration de service dans laquelle il est destiné à être en contact avec le rail pour supporter sensiblement au moins une fraction du poids dudit dispositif d'accouplement tout en permettant un déplacement de ce dernier le long du rail et d'autre part une configuration de repos dans laquelle il ne supporte sensiblement pas le poids dudit dispositif d'accouplement, le moyen d'attache et l'organe de support étant conçus pour évoluer entre leurs configurations respectives indépendamment l'un de l'autre,
- un corps principal portant le moyen d'attache et l'organe de support,
ledit dispositif étant **caractérisé en ce que** l'organe de support est monté mobile relativement au corps principal entre une position de repos, correspondant à la configuration de repos, et une position de service correspondant à la configuration de service.

D'autres objets et avantages de l'invention apparaîtront plus en détails à la lecture de la description qui suit, ainsi qu'à l'aide des dessins annexés, donnés à titre purement illustratif et non limitatif, parmi lesquels :
- La figure 1 illustre, selon une vue schématique en perspective, un dispositif d'accouplement conforme à un premier mode de réalisation de l'invention et dont l'organe de support est en configuration de repos.
- La figure 2 illustre, selon une vue schématique de dessus, le dispositif d'accouplement de la figure 1.
- La figure 3 est une vue schématique en coupe, selon la ligne B-B du dispositif de la figure 2.
- La figure 4 illustre, selon une vue schématique de dessous, le dispositif des figures 1 à 3 avec son moyen d'attache en configuration de libération.
- Les figures 5 et 6 illustrent, selon des vues en coupe transversale, la coopération entre le rail et le moyen d'attache du dispositif des figures précédentes respectivement lorsque le moyen d'attache se trouve en configuration de libération et en configuration d'attache.
- La figure 7 illustre, selon une vue schématique en perspective, le dispositif des figures 1 à 6 avec son organe de support en configuration de service.
- La figure 8 est une vue schématique en coupe, selon la ligne B-B, du dispositif des figures précédentes avec son organe de support en configuration de service.
- La figure 9 illustre, selon une vue schématique en perspective, un dispositif d'accouplement conforme à un deuxième mode de réalisation de l'invention et dont l'organe de support est en configuration de service.

L'invention concerne un dispositif d'accouplement 1 à un rail 2, ledit rail 2 étant embarqué dans un véhicule (non représenté).

De façon préférentielle, le dispositif d'accouplement 1 constitue un dispositif d'accouplement à un rail 2 embarqué dans un aéronef, tel qu'un avion ou un hélicoptère par exemple. Dans ce qui suit, on fera référence uniquement, pour des raisons de simplicité et de concision de la description, à un dispositif 1 spécifiquement conçu pour être accouplé à un rail 2 embarqué dans un aéronef, étant entendu que l'invention n'est pas limitée à cette application aéronautique préférentielle et peut également être employée sur un véhicule terrestre ou nautique. De préférence, le dispositif 1 est un dispositif d'accouplement rapide, permettant à un utilisateur d'accoupler et de désaccoupler à volonté le dispositif 1 de façon manuelle, à l'aide de sa seule force physique. De préférence, l'utilisateur peut réaliser l'accouplement et le désaccouplement sans outil, en manipulant directement des organes de commande intégrés au dispositif 1. Ce dernier est ainsi dans ce cas préférentiel un dispositif à auto-accouplement. Le dispositif 1 est lui-même destiné à être solidarisé, par tout moyen approprié connu dans le domaine, à un équipement que l'on souhaite attacher au rail 2, comme par exemple un siège, un chariot ou un élément de cuisine de bord. Le dispositif d'accouplement 1 forme ainsi une interface de fixation entre un équipement à installer dans le véhicule et le rail 2.

De manière connue en soi, le rail 2 avec lequel le dispositif d'accouplement 1 est préférentiellement destiné à coopérer comporte un fond 2A destiné à être rapporté et fixé sur le véhicule, et par exemple sur le plancher de ce dernier. A partir et sur les cotés dudit fond 2A s'élèvent deux parois latérales parallèles 2B, 2C, elles-mêmes coiffées d'une paroi d'attache 2D qui s'étend de préférence sensiblement parallèlement au fond 2A. La paroi d'attache 2D présente d'une part une face interne 20D, qui fait face au fond 2A et d'autre part une face externe 21 D opposée à ladite face interne 20D.

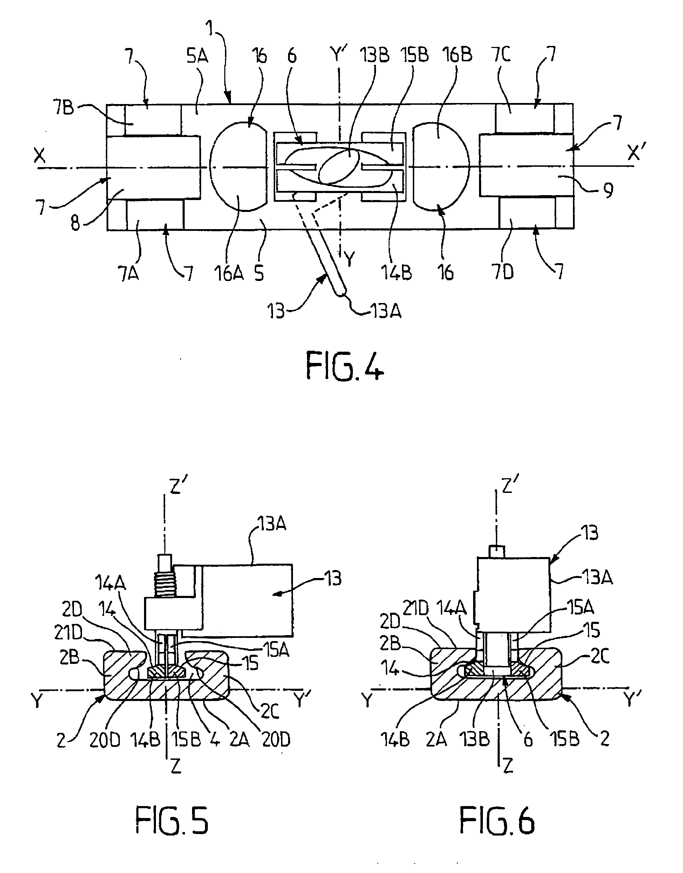

Le rail 2 comporte en outre une ouverture 3 traversant la paroi d'attache 2D entre lesdites faces interne 20D et externe 21 D selon une direction de perçage Z-Z' (cf. figures 5 et 6). En d'autres termes, l'ouverture 3 traverse complètement la paroi d'attache 2D et permet ainsi un accès de l'extérieur vers le volume interne 4 du rail 2 délimité conjointement par le fond 2A, les parois latérales 2B, 2C et la paroi d'attache 2D. La direction de perçage Z-Z' correspond, lorsque le rail 2 est assujetti à un plancher horizontal, à la direction verticale. Cette direction de perçage Z-Z' est perpendiculaire à la direction longitudinale X-X' correspondant à la direction principale d'extension du rail 2. La direction transversale Y-Y' correspond quant à elle, au sens de l'invention, à une direction perpendiculaire à la fois à la direction de perçage Z-Z' (direction verticale) et la direction longitudinale X-X'. De préférence, tel que cela est illustré aux figures, l'ouverture 3 présente une forme allongée s'étendant longitudinalement selon la direction principale d'extension X-X' du rail 2, ladite ouverture 3 présentant des portions 3A de section agrandie (alvéoles) disposées à intervalles réguliers le long du rail 2, les portions 3A de section agrandie étant reliées les unes aux autres par des portions rectilignes 3B. En d'autres termes, l'ouverture 3 se présente avantageusement sous la forme d'une fente longiligne s'étendant parallèlement à la direction principale X-X' d'extension du rail 2, la section de ladite fente dans le plan horizontal (c'est à dire le plan parallèle aux faces interne 20D et externe 21 D) variant longitudinalement de façon régulière pour former préférentiellement des ouvertures circulaires (ou pseudo-circulaires) agrandies (les alvéoles) correspondant aux portions 3A de section agrandie, lesdites alvéoles étant reliées par des fentes rectilignes correspondant aux portions 3B. Une telle construction de rail est bien connue en tant que telle, en particulier dans le secteur aéronautique, de sorte qu'il n'est pas nécessaire de la décrire plus avant ici.

Le dispositif d'accouplement 1 comporte un corps principal 5 destiné de préférence à être rapporté sur la face externe 21 D de la paroi d'attache 2D du rail 2. En d'autres termes, le corps principal 5 est avantageusement conçu pour reposer directement contre et sur la face externe 21 D, de manière à surplomber l'ouverture 3.

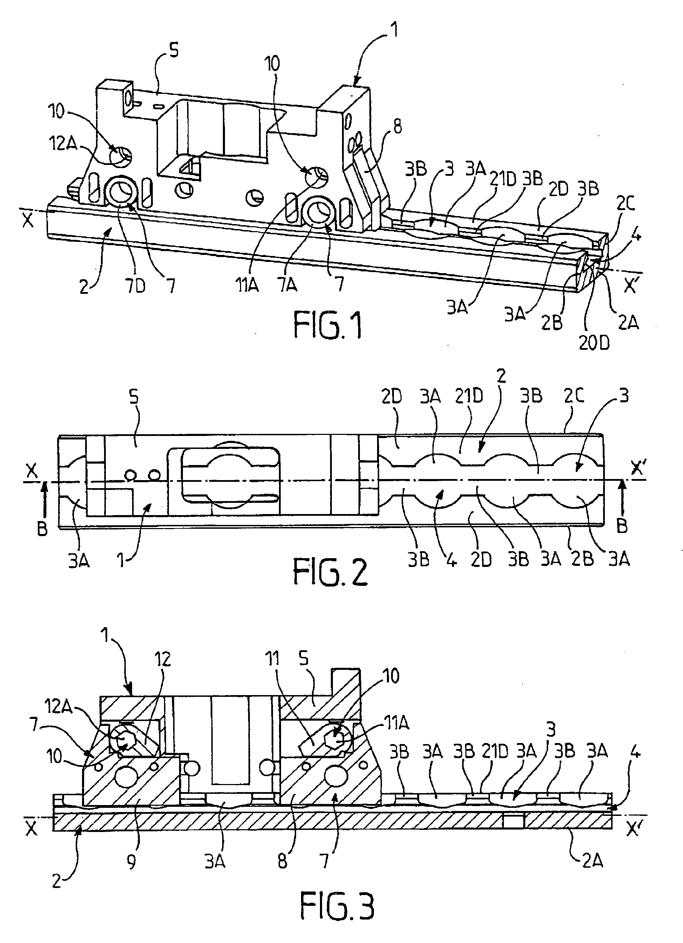

Le dispositif d'accouplement 1 comporte également un moyen d'attache 6 capable d'évoluer entre d'une part une configuration d'attache (illustrée notamment à la figure 6) dans laquelle le moyen d'attache 6 est conçu pour attacher le dispositif d'accouplement 1 au rail 2 et d'autre part une configuration de libération dans laquelle le moyen d'attache 6 est conçu pour autoriser la séparation du dispositif d'accouplement 1 et du rail 2. En d'autres termes, le moyen d'attache 6 permet, lorsqu'il se trouve en configuration d'attache (et que le dispositif d'accouplement 1 est en position fonctionnelle, c'est-à-dire qu'il est rapporté sur et contre le rail 2 comme illustré aux figures 1 à 3, 7 et 8) d'assembler le dispositif 1 au rail 2, de telle sorte qu'il est impossible, sauf à faire passer le moyen d'attache 6 dans sa configuration de libération, de séparer le dispositif d'accouplement 1 du rail 2. Ainsi, le moyen d'attache 6 est conçu pour assujettir le dispositif d'accouplement 1 au rail 2 lorsqu'il se trouve en configuration d'attache. A l'inverse, le moyen d'attache 6 est conçu pour permettre, lorsqu'il se trouve en configuration de libération, la libre dissociation des dispositifs d'accouplement 1 et rail 2.

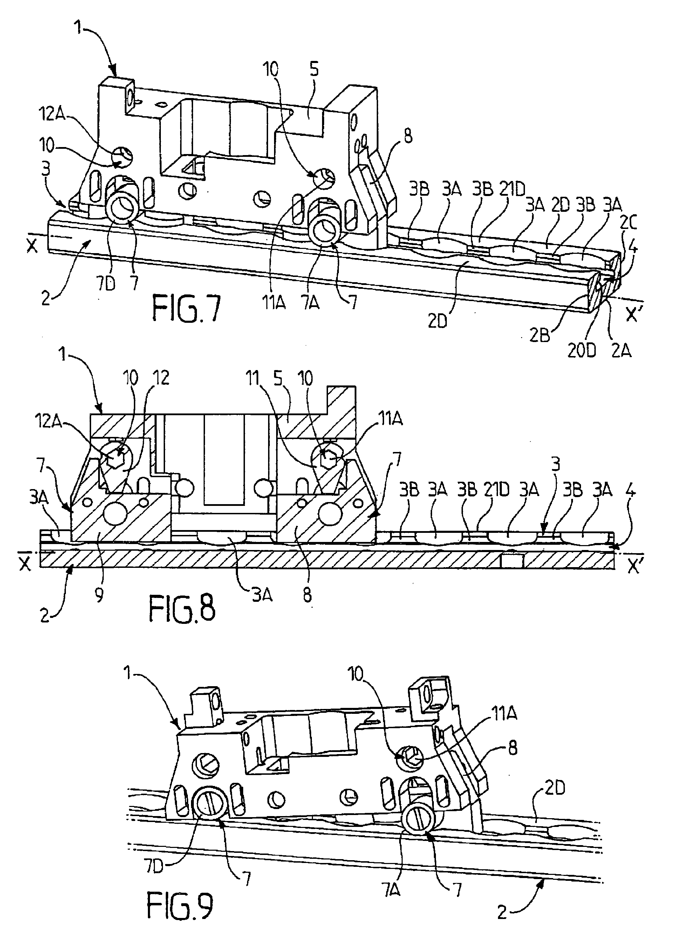

Le dispositif d'accouplement 1 comprend en outre un organe de support 7 conçu pour évoluer entre d'une part une configuration de service (illustré aux figures 7 et 8 pour le premier mode de réalisation et à la figure 9 pour le second) dans laquelle il est destiné à être en contact avec le rail 2 pour supporter sensiblement au moins une fraction du poids du dispositif d'accouplement 1, tout en permettant un déplacement de ce dernier le long du rail 2, selon la direction longitudinale X-X', et d'autre part une configuration de repos (illustré aux figures 1 et 3) dans laquelle l'organe de support 7 ne supporte sensiblement pas le poids dudit dispositif d'accouplement 1. En d'autres termes, la configuration de service est une configuration dans laquelle l'organe de support est actif, c'est-à-dire que d'une part il supporte le dispositif d'accouplement 1 et d'autre part il génère une interface de contact entre ce dernier et le rail 2 qui permet, et de préférence facilite, le déplacement longitudinal du dispositif d'accouplement 1 sur le rail 2, par exemple sous l'effet d'un effort manuel exercé par l'utilisateur sur le dispositif d'accouplement 1.

Avantageusement, comme illustré aux figures, l'organe de support 7 est conçu pour supporter sensiblement la totalité du poids du dispositif d'accouplement 1 lorsqu'il est en configuration de service, de manière à faciliter le déplacement du dispositif d'accouplement 1 le long du rail 2, et ainsi permettre à l'utilisateur d'ajuster facilement et sans effort la position du dispositif 1 relativement au rail 2.

A cette fin, l'organe de support 7 comprend de préférence au moins une roue, et de préférence quatre roues 7A, 7B, 7C, 7D formant un train roulant pour que le dispositif d'accouplement 1 puisse rouler sur le rail 2, et de préférence sur la face externe 21 D, lorsque l'organe de support 7 est en configuration de service, comme illustré notamment à la figure 7.

Les roues 7A, 7B, 7C, 7D permettent de faciliter le déplacement longitudinal du dispositif d'accouplement 1 le long du rail 2, de sorte que l'utilisateur n'a qu'à exercer une poussée sur le dispositif d'accouplement 1 pour générer, avec un effort minime, la mise en mouvement du dispositif d'accouplement 1.

Le recours à des roues n'est toutefois qu'une option technique préférentielle parmi d'autres, l'essentiel étant que la nature tribologique du contact entre le dispositif 1 et le rail 2 soit plus favorable à un déplacement longitudinal du dispositif 1 le long du rail 2 lorsque l'organe de support 7 est en configuration de service que lorsqu'il est en configuration de repos. Il est par exemple tout à fait envisageable de recourir, en lieu et place des roues 7A, 7B, 7C, 7D, à des patins glisseurs formant un train glissant pour que le dispositif d'accouplement 1 puisse glisser sur le rail 2 lorsque l'organe de support 7 est en configuration de service.

Le corps principal 5 porte le moyen d'attache 6 et l'organe de support 7, c'est-à-dire que le moyen d'attache 6 et l'organe de support 7 sont tous deux montés sur le corps principal 5. Comme illustré aux figures, l'organe de support 7 est monté mobile relativement au corps principal 5 entre une position de repos (illustré à la figure 1), correspondant à la configuration de repos, et une position de service (illustré à la figure 7) correspondant à la configuration de service.

De préférence, le corps principal 5 est conçu pour reposer sur le rail 2 lorsque l'organe de support 7 est en configuration de repos, l'organe de support 7 étant lui-même conçu pour exercer sur le rail 2, lorsqu'il passe de sa configuration de repos à sa configuration de service, un effort permettant d'écarter le corps principal 5 du rail 2, et par exemple de soulever le corps principal 5 au-dessus et à distance du rail 2, et plus précisément de la face externe 21 D. Ainsi, le dispositif d'accouplement 1 génère, par l'intermédiaire de l'organe de support 7 qui appuie directement, via les roues 7A, 7B, 7C, 7D sur le rail 2, un effort de poussée qui soulève le corps principal 5 sensiblement selon la direction verticale Z-Z', le corps principal 5 n'étant alors plus en contact avec le rail 2, de sorte que le poids du dispositif d'accouplement 1 est repris par l'organe de support 7.

Cette mesure technique permet d'obtenir un dispositif d'accouplement 1 de construction particulièrement simple, compacte et robuste, en limitant le nombre de pièces au minimum, puisque c'est l'organe de support 7 lui-même, en l'occurrence par l'intermédiaire des roues 7A, 7B, 7C, 7D, qui assure le transfert du poids du dispositif d'accouplement 1 du corps principal 5 à l'organe de support 7 en plaçant le corps principal 5 hors de contact du rail 2.

Avantageusement, l'organe de support 7 est monté à translation sur le corps principal 5 entre ses positions de repos et de service. Dans ce mode de réalisation avantageux, l'organe de support 7 comprend ainsi de préférence au moins un chariot ou, de façon encore plus préférentielle, comme dans la variante des figures 1 à 8, deux chariots 8, 9 montés chacun à translation sur le corps principal 5 entre une position escamotée (illustrée à la figure 1) correspondant à la position de repos de l'organe de support 7 et une position expansée (illustrée à la figure 7) correspondant à la position de service de l'organe de support 7. Avantageusement, chaque chariot 8, 9 est monté à translation sur le corps principal 5 selon la direction verticale Z-Z'. Chaque chariot 8, 9 peut être monté à translation sur le corps principal 5 par tout moyen connu permettant de réaliser une liaison glissière entre le corps principal 5 et le chariot 8, 9. De préférence, comme illustré aux figures, chaque chariot 8, 9 porte respectivement deux roues 7A, 7B, 7C, 7D, le dispositif d'accouplement 1 disposant ainsi dans ce cas de deux trains roulants disposés vers chacune de ses extrémités selon la direction longitudinale X-X'. Chaque train roulant est constitué d'un chariot 8, 9 et de deux roues 7A, 7B, 7C, 7D montées à rotation libre sur le chariot 8, 9 correspondant, ce dernier coulissant verticalement sur le corps principal 5. Par exemple, chaque paire de roues est montée sur un même axe qui est monté à pivotement sur le chariot correspondant et qui s'étend sensiblement parallèlement à la direction transversale Y-Y'.

Une telle construction, impliquant uniquement un montage en translation de l'organe de support 7, relativement au corps principal 5 est particulièrement avantageuse car elle présente un caractère extrêmement fiable, robuste et bon marché.

Dans la variante des figures 1 à 8 évoquée dans ce qui précède, les deux chariots 8, 9 soulèvent tous deux le corps principal 5 de façon à ce que ce dernier conserve son orientation. Il est cependant tout à fait envisageable, comme illustré à la figure 9, que l'un des chariots 8 soit monté fixe sur le corps principal 5, et que seul l'autre chariot 9 se soulève, ce qui entraîne la mise en contact des roues du premier chariot 8 avec le rail 2, permettant ainsi le roulage du dispositif 1. Il est également envisageable, en tant qu'autre variante alternative (non illustrée), que les trains de roues 7A, 7B, 7C, 7D soient tous montés fixes sur le corps principal 5, ce dernier étant pourvu d'une semelle mobile montée à translation verticale entre une position déployée d'appui, dans laquelle la semelle appuie sur le rail 2 pour supporter le poids du dispositif 1 et mettre les roues hors de contact du rail, et une position rétractée dans laquelle la semelle laisse les roues venir au contact du rail 2 pour supporter le poids du dispositif 1.

Avantageusement, chaque chariot 8, 9 est conçu pour s'étendre, lorsqu'il est en position expansée, à l'intérieur de l'ouverture 3 ménagée longitudinalement dans le rail 2, de façon à assurer un guidage longitudinal du dispositif d'accouplement 1 lors de son déplacement le long du rail 2. Cette mesure technique permet ainsi d'éviter un déraillement intempestif du dispositif d'accouplement 1 lorsque ce dernier roule sur le rail 2. Ce guidage opéré par chaque chariot 8, 9 contribue en outre à une meilleure résistance du dispositif d'accouplement 1 aux efforts latéraux que pourrait subir ce dernier.

Il est également envisageable que le dispositif 1 soit pourvu d'un moyen de retenue verticale, qui empêche le dispositif 1 de s'écarter verticalement du rail 2 lorsqu'il roule (ou glisse) sur et le long du rail 2. Ce moyen de retenue verticale est ainsi conçu pour évoluer entre d'une part une configuration activée dans laquelle il attache le dispositif d'accouplement 1 au rail 2 tout en autorisant le déplacement longitudinal du dispositif 1 le long du rail 2, et d'autre part une configuration désactivée dans laquelle il permet la libre séparation du dispositif 1 et du rail 2.

Avantageusement, le dispositif d'accouplement 1 comprend un premier moyen de commande 10 conçu pour être actionné, de préférence manuellement, par un utilisateur, pour permettre à ce dernier de commander le passage de l'organe de support 7 de sa configuration de repos à sa configuration de service. Le premier moyen de commande 10 permet avantageusement de commander réciproquement le passage de l'organe de support 7 de sa configuration de service à sa configuration de repos, c'est-à-dire qu'il présente dans ce cas un caractère réversible.

Par exemple, le premier moyen de commande 10 comprend avantageusement, comme illustré aux figures, une came rotative 11 (et de préférence deux cames rotatives 11, 12 pour ce qui est de la variante des figures 1 à 8) coopérant avec le chariot 8 (respectivement avec le chariot 9 dans le cas de la variante des figures 1 à 8) pour faire évoluer ce dernier entre ses positions escamotée et expansée.

Par exemple, chaque came 11, 12 est montée à rotation sur le corps principal 5, selon un axe qui est de préférence sensiblement parallèle à la direction transversale Y-Y'.

De préférence, chaque came rotative 11, 12 est pourvue d'une empreinte polygonale correspondante 11A, 12A destinée à recevoir la tête d'un outil de manipulation (par exemple, une clé à six pans) permettant à l'utilisateur de mettre en rotation la came correspondante 11, 12 et ainsi de déplacer en translation verticale le chariot correspondant 8, 9 et les roues 7A, 7B, 7C, 7D, portées respectivement par ce dernier. Avantageusement, chaque came 11, 12 est conformée pour coopérer avec une surface complémentaire du chariot correspondant 8, 9 de façon que la position escamotée soit une position d'équilibre stable, et que la position expansée soit une position d'équilibre instable, la position escamotée étant avantageusement une position de rappel sous l'effet du poids du dispositif 1.

Le recours à un système de cames rotatives 11, 12 pour actionner le déplacement en translation des roues 7A, 7B, 7C, 7D, est particulièrement intéressant en ce qu'il permet une démultiplication d'effort qui s'avère particulièrement bienvenue lorsqu'un équipement lourd est fixé au dispositif d'accouplement 1, et que donc le passage de la configuration de repos à la configuration de service revient pour l'utilisateur à soulever tout ou partie du poids de l'équipement en question.

Le moyen d'attache 6 et l'organe de support 7 sont conçus pour évoluer entre leurs configurations respectives (c'est-à-dire les configurations d'attache et de libération pour le moyen d'attache 6 et les configurations de repos et de service pour l'organe de support 7) indépendamment l'un de l'autre. Cela signifie que le moyen d'attache 6 et l'organe de support 7 sont commandés séparément, c'est-à-dire indépendamment l'un de l'autre. De cette façon, il est possible à l'utilisateur d'agir sur la configuration du moyen d'attache 6 sans que cela n'influe sur la configuration de l'organe du support 7 et réciproquement.

Cette caractéristique technique, qui consiste à dissocier cinématiquement le moyen d'attache 6 et l'organe de support 7, permet de conférer au dispositif d'accouplement conforme à l'invention une architecture particulièrement simplifiée et facile à utiliser. Une telle architecture permet en outre de prévoir certaines fonctionnalités intéressantes, comme par exemple une fonction d'adaptation du dispositif d'accouplement 1 à une géométrie spécifique de rail 2, comme cela sera détaillé dans ce qui suit.

La dissociation du fonctionnement du moyen d'attache 6 et de l'organe de support 7 permet également une meilleure sécurité d'utilisation, l'utilisateur pouvant se concentrer sur chaque opération, et en particulier sur l'opération d'attache (mise du moyen d'attache 6 en configuration d'attache) sans qu'une liaison fonctionnelle directe entre le moyen d'attache 6 et l'organe de support 7 ne vienne perturber sa perception du fonctionnement du moyen d'attache 6 et/ou de l'organe de support 7.

Ainsi, selon le mode de réalisation avantageux illustré aux figures, le dispositif d'accouplement 1 comprend un deuxième moyen de commande 13 conçu pour être actionné par l'utilisateur afin de permettre à ce dernier de commander le passage du moyen d'attache 6 de sa configuration de libération à sa configuration d'attache, ce deuxième moyen de commande 13 étant distinct du premier moyen de commande 10, c'est-à-dire qu'il permet, comme évoqué précédemment, de commander de façon complètement indépendante le passage du moyen d'attache 6 de sa configuration d'attache à sa configuration de libération et inversement, sans interagir directement avec l'organe de support 7.

Avantageusement, le moyen d'attache 6 est conçu pour évoluer, par variation de son encombrement selon la direction transversale Y-Y' définie relativement à la direction longitudinale X-X' d'extension du rail 2, entre d'une part une configuration rétractée (illustrée à la figure 5) lui permettant d'être insérée par une ouverture ménagée à la surface du rail 2, c'est-à-dire en l'espèce par l'ouverture 3, et d'autre part une configuration déployée (illustrée à la figure 6) qui interdit l'extraction du moyen d'attache 6 par ladite ouverture 3, et permet ainsi de solidariser le dispositif d'accouplement 1 au rail 2. En d'autres termes, la fonction de verrouillage assurée par le moyen d'attache 6 est obtenue en réalisant une augmentation de l'encombrement de ce dernier dans la direction radiale (laquelle est définie par rapport à la direction verticale Z-Z'), la position du moyen d'attache 6 restant avantageusement fixe selon la direction longitudinale X-X'. Cette variante de réalisation est donc basée sur un changement de conformation du moyen d'ancrage 6 pour opérer un verrouillage, étant entendu que la fonction du verrouillage peut être assurée par tout autre moyen connu dans le domaine, et par exemple selon les principes exposés dans la demande de brevet français FR-02 02964 du même demandeur.

Dans les variantes de réalisation illustrées aux figures (voir en particulier les figures 4 à 6), le passage du moyen d'attache 6 de sa configuration de libération à sa configuration d'attache correspond à une augmentation de l'encombrement transversal (selon la direction Y-Y') dudit moyen d'attache 6 qui permet de réaliser une ancre au sein du volume interne 4, ancre dont l'encombrement transversal est suffisant pour empêcher son passage par l'ouverture 3, ce qui assure ainsi le blocage, selon la direction verticale Z-Z', du dispositif d'accouplement 1 relativement au rail 2. De préférence, et comme illustré aux figures 4 à 6, le moyen d'attache 6 comprend au moins une première surface de blocage 14 qui, lorsque le moyen d'attache 6 passe de sa configuration de libération à sa configuration d'attache, se déplace pour venir exercer une pression d'appui contre la face interne 20D de la paroi d'attache 2D, de façon que la paroi d'attache 2D soit pressée entre la première surface de blocage 14 et le corps principal 5 (lorsque l'organe de support 7 est en configuration de repos), pour réaliser ainsi une liaison mécanique anti-vibrations entre le dispositif d'accouplement 1 et le rail 2. De préférence, le moyen d'attache 6 comporte une pluralité de surfaces de blocage. Ainsi, dans les variantes illustrées aux figures, le moyen d'attache 6 comprend deux surfaces de blocage 14, 15. Par exemple, chaque surface de blocage 14, 15 est pourvue d'un pan incliné relativement à la face interne 20D qui vient glisser, sous l'effet du passage de la configuration de libération à la configuration d'attache, contre la face interne 20D, parallèlement à la face externe 21D, pour ainsi presser la face interne 20D grâce à sa conformation inclinée et empêcher de ce fait tout jeu entre le rail 2 et le dispositif d'accouplement 1. Chaque pan incliné des surfaces de blocage 14, 15 agit ainsi à la manière d'un coin qui pousse verticalement contre la face interne 20D de manière à réaliser de façon simple et économique une liaison mécanique ajustée entre le dispositif d'accouplement 1 et le rail 2, cette connexion ajustée permettant d'obtenir un effet anti-vibrations. Dans les modes de réalisation particulièrement avantageux illustrés aux figures, le moyen d'attache 6 comprend deux bras 14A, 15A montés à translation selon la direction transversale Y-Y', chaque bras 14A, 15A, portant une pièce correspondante 14B, 15B, conformée pour réaliser la surface de blocage 14, 15. De préférence, tel que cela est illustré en particulier à la figure 4, le deuxième moyen de commande 13 comprend une poignée 13A montée à rotation sur le corps principal 5, selon un axe parallèle à la direction verticale Z-Z'. Avantageusement, le deuxième moyen de commande 13 comprend également une came 13B entraînée en rotation, de préférence directement, par la poignée 13A, ladite came 13B interagissant avec chaque pièce 14B, 15B pour commander le déplacement en translation des surfaces de blocage 14, 15. Plus précisément, la came 13B agit de préférence simultanément sur chaque pièce 14B, 15B, de façon à provoquer un écartement mutuel desdites pièces selon la direction Y-Y'. Une telle construction est décrite en détails dans la demande de brevet FR-07 01318 du même demandeur.

De préférence, le moyen d'attache 6 est ainsi construit de la même manière que le *« moyen d'ancrage »* décrit dans la demande FR-07 01318 précitée.

La combinaison d'un tel moyen d'attache 6 avec l'organe de support 7 est particulièrement avantageuse car elle permet à l'utilisateur de pouvoir très facilement, à moindre effort et de façon fiable, ajuster la position longitudinale du dispositif d'accouplement 1 le long du rail 2, tout en bénéficiant d'un verrouillage efficace anti-vibrations.

Dans la variante décrite dans ce qui précède, le moyen d'attache 6 permet de solidariser le dispositif d'accouplement 1 au rail 2 et d'interdire sensiblement tout déplacement du dispositif d'accouplement 1 relativement au rail 2 selon la direction verticale Z-Z'.

Le blocage longitudinal du dispositif d'accouplement 1 est quant à lui de préférence assuré par un moyen distinct. A cet égard, le dispositif d'accouplement 1 comprend de préférence un élément d'immobilisation 16 conçu pour évoluer entre d'une part une position de blocage, dans laquelle il est destiné à venir s'engager dans une ouverture ménagée à la surface du rail 2, en l'occurrence dans une alvéole 3A, pour sensiblement empêcher tout mouvement de translation du dispositif 1 parallèlement au plan moyen dans laquelle s'inscrit la direction longitudinale d'extension X-X' du rail 2, et d'autre part une position de désengagement, dans laquelle il est destiné à être situé hors de ladite ouverture 3A pour permettre un déplacement en translation du dispositif 1 au moins selon la direction longitudinale X-X' d'extension du rail 2.

Par exemple, dans le mode de réalisation illustré aux figures, l'élément d'immobilisation 16 comprend au moins un, et de préférence deux pieds 16A, 16B, dont la forme est avantageusement sensiblement complémentaire à celle des portions d'ouverture 3A des sections agrandies formant alvéoles.

Lesdits pieds 16A, 16B sont destinés à être introduits chacun dans une alvéole de façon ajustée, pour empêcher sensiblement le déplacement longitudinal (c'est-à-dire selon la direction X-X') et transversal (c'est-à-dire selon la direction Y-Y') du dispositif d'accouplement 1 relativement au rail 2. De préférence, l'élément d'immobilisation 16 est solidaire du corps principal 5, et est par exemple monté de façon fixe sur la face inférieure 5A du corps principal 5 destinée à venir en contact avec le rail 2. Avantageusement, l'élément d'immobilisation 16 est solidaire du corps principal 5 de façon que lorsque l'organe de support 7 est en position de repos, l'élément d'immobilisation 16 adopte sa position de blocage (c'est-à-dire qu'il interagit avec une alvéole 3A pour bloquer le déplacement du dispositif d'accouplement 1 en translation horizontale) et que lorsque l'organe de support 7 est au contraire en position de service, l'élément d'immobilisation 16 adopte sa position de désengagement, c'est-à-dire que les pieds 16A, 16B sont alors situés hors des alvéoles 3A, au-dessus de ces dernières, autorisant ainsi le déplacement longitudinal du dispositif d'accouplement 1 le long du rail 2.

Avantageusement, le dispositif d'accouplement 1 comprend un moyen de réglage de la position du moyen d'attache 6 selon la direction verticale Z-Z' (laquelle est perpendiculaire à la fois à la direction longitudinale X-X' d'extension du rail 2 et à la direction transversale Y-Y'). En d'autres termes, ce moyen de réglage (non représenté) permet de régler la distance entre la face inférieure 5A du corps principal 5 et les faces de blocage 14, 15, de manière à pouvoir adapter le dispositif d'accouplement 1 à n'importe quelles dimensions de rail 2. A cet égard, le découplage entre la commande de l'organe de support 7 et celle du moyen d'attache 6 est bien entendu très avantageuse.

Le fonctionnement du dispositif d'accouplement 1 conforme à l'invention va être décrit dans ce qui suit.

Le dispositif d'accouplement 1 se trouve initialement dans un état de repos, prêt à être posé. Dans cet état de repos, le moyen d'attache 6 est en configuration de libération (comme illustré aux figures 4 et 5), tandis que l'organe de support 7 est en configuration de repos (comme illustré à la figure 1). Dans cette configuration de repos, les roues, 7A, 7B, 7C, 7D sont avantageusement rétractées dans le volume du corps principal 5, comme illustré à la figure 1, de sorte que le dispositif d'accouplement 1 présente un caractère particulièrement compact et robuste. Le corps principal 5 est par exemple fixé à un élément de cuisine de bord que l'utilisateur se propose d'arrimer au plancher d'un avion sur lequel est assujetti le rail 2.

L'utilisateur rapporte alors le dispositif d'accouplement 1 sur le rail 2, de façon à faire reposer la face intérieure 5A du corps principal 5 sur la face externe 21 D. Le dispositif d'accouplement 1 se trouve alors prêt à être verrouillé sur le rail 2, sans qu'il ne soit nécessaire au préalable de faire passer l'organe de support 7 en configuration de service. En revanche, si la position longitudinale du dispositif d'accouplement 1 relativement au rail 2 n'est pas satisfaisante, l'utilisateur actionne alors, en l'occurrence à l'aide d'une clef à pans, les cames 11, 12 de façon à repousser chaque chariot 8, 9 vers le bas selon la direction verticale Z-Z'. Sous l'effet du déplacement des chariots 8, 9, chaque paire de roues 7A, 7B, 7C, 7D vient pousser sur la face externe 21 D du rail 2, ce qui par réaction soulève le corps principal 5 (et l'élément de cuisine de bord porté par ce dernier) au-dessus du rail 2, à distance de ce dernier.

A cet instant, le poids du dispositif d'accouplement 1 et de l'élément de cuisine porté par ce dernier est supporté par les roues 7A, 7B, 7C, 7D.

Il suffit alors à l'utilisateur d'exercer une poussée longitudinale sur le dispositif d'accouplement 1 (par exemple sur le corps principal 5 ou sur l'élément de cuisine de bord porté par ce dernier) pour faire rouler le dispositif d'accouplement 1 sur le rail 2 jusqu'à une position satisfaisante. Une fois cette position satisfaisante atteinte, l'utilisateur fait tourner, à l'aide de sa clé à pans, les cames 11, 12 en sens inverse pour ramener chaque chariot 8, 9 dans sa position escamotée, sous l'effet du poids du dispositif d'accouplement 1. Ceci a pour effet de faire redescendre le corps principal 5 sur et contre le rail 2, ce qui provoque l'engagement de deux alvéoles 3A par les pieds 16A, 16B. A cet instant, la position du dispositif d'accouplement 1 dans le plan (horizontal) d'extension du rail 2 est donc fixée, grâce à la coopération entre les pieds 16A, 16B et les alvéoles correspondantes 3A. L'utilisateur procède alors enfin à la solidarisation du dispositif d'accouplement 1 sur le rail 2, par mise en rotation de la poignée 13A. Cette mise en rotation de la poignée 13A selon un axe parallèle à l'axe vertical Z-Z' génère une rotation de la came 13B qui elle-même repousse vers l'extérieur les pièces 14B, 15B. A cet instant, il est possible que la distance entre la face inférieure 5A et les faces de blocage 14, 15 ne soit pas suffisante au regard de la géométrie du rail 2, de sorte que les pièces 14B, 15B viennent alors en collision avec les faces latérales du rail 2 sans réaliser le verrouillage attendu. L'utilisateur se rend bien évidement compte de cette situation, puisqu'il ne parvient pas à refermer complètement la poignée 13A. Il n'a alors qu'à agir sur le moyen de réglage de la position du moyen d'attache 6 selon la direction verticale Z-Z' pour faire descendre les pièces 14b, 15b, c'est-à-dire augmenter la distance entre les faces de blocage 14, 15 et la face inférieure 5A du corps principal 5. Une fois cette opération de réglage effectuée, la poignée 13A peut être complètement rabattue de sorte que les faces de blocages 14, 15 viennent engager la paroi 20D du rail 2, de façon à opérer un verrouillage complet du dispositif d'accouplement 1 relativement au rail 2.

## Revendications

1. Dispositif d'accouplement (1) à un rail (2) embarqué dans un véhicule, ledit dispositif (1) comprenant :
- un moyen d'attache (6) capable d'évoluer entre d'une part une configuration d'attache dans laquelle le moyen d'attache (6) est conçu pour attacher le dispositif d'accouplement (1) au rail (2) et d'autre part une configuration de libération dans laquelle il est conçu pour autoriser la séparation desdits dispositif d'accouplement (1) et rail (2),
- un organe de support (7) conçu pour évoluer entre d'une part une configuration de service dans laquelle il est destiné à être en contact avec le rail (2) pour supporter sensiblement au moins une fraction du poids dudit dispositif d'accouplement (1) tout en permettant un déplacement de ce dernier le long du rail (2) et d'autre part une configuration de repos dans laquelle il ne supporte sensiblement pas le poids dudit dispositif d'accouplement (1), le moyen d'attache (6) et l'organe de support (7) étant conçus pour évoluer entre leurs configurations respectives indépendamment l'un de l'autre,
- un corps principal (5) portant le moyen d'attache (6) et l'organe de support (7),
ledit dispositif (1) étant **caractérisé en ce que** l'organe de support (7) est monté mobile relativement au corps principal (5) entre une position de repos, correspondant à la configuration de repos, et une position de service correspondant à la configuration de service.

2. Dispositif (1) selon la revendication 1 **caractérisé en ce que** l'organe de support (7) est conçu pour supporter sensiblement la totalité du poids du dispositif d'accouplement (1) lorsqu'il est en configuration de service.

3. Dispositif (1) selon la revendication 1 ou 2 **caractérisé en ce que** ledit organe de support (7) comprend au moins une roue (7A, 7B, 7C, 7D) pour que ledit dispositif d'accouplement (1) puisse rouler sur le rail (2) lorsque l'organe de support (7) est en configuration de service.

4. Dispositif (1) selon l'une des revendications 1 à 3 **caractérisé en ce que** l'organe de support (7) est monté à translation sur le corps principal (5) entre ses positions de repos et de service.

5. Dispositif (1) selon les revendications 3 et 4 **caractérisé en ce que** l'organe de support (7) comprend au moins un chariot (8, 9) monté à translation sur le corps principal (5) entre une position escamotée correspondant à la position de repos et une position expansée correspondant à la position de service, ledit dispositif (1) comprenant une came rotative (11, 12) coopérant avec le chariot (8, 9) pour faire évoluer ce dernier entre ses positions escamotée et expansée.

6. Dispositif (1) selon l'une des revendications 1 à 5 **caractérisé en ce que** le corps principal (5) est conçu pour reposer sur le rail (2) lorsque l'organe de support (7) est en configuration de repos, l'organe de support (7) étant conçu pour exercer sur le rail (2), lorsqu'il passe de sa configuration de repos à sa configuration de service, un effort permettant d'écarter le corps principal du rail (2).

7. Dispositif (1) selon l'une des revendications 1 à 7 **caractérisé en ce qu'**il comprend un élément d'immobilisation (16) conçu pour évoluer entre d'une part une position de blocage dans laquelle il est destiné à venir s'engager dans une ouverture (3A) ménagée à la surface du rail (2) pour sensiblement empêcher tout mouvement de translation du dispositif (1) parallèlement au plan moyen dans lequel s'inscrit la direction longitudinale d'extension (X-X') du rail (2) et d'autre part une position de désengagement dans laquelle il est destiné à être situé hors de ladite ouverture (3A) pour permettre un déplacement en translation du dispositif (1 ) au moins selon la direction longitudinale (X-X') d'extension du rail (2).

8. Dispositif (1) selon la revendication 7 **caractérisé en ce que** l'élément d'immobilisation (16) est solidaire du corps principal (5), de façon que lorsque l'organe de support (7) est en position de repos l'élément d'immobilisation (16) adopte sa position de blocage et que lorsque l'organe de support (7) est en position de service l'élément d'immobilisation (16) adopte sa position de désengagement.

9. Dispositif (1) selon l'une des revendications 1 à 8 **caractérisé en ce qu'**il comprend un premier moyen de commande (10) conçu pour être actionné par un utilisateur pour permettre à ce dernier de commander le passage de l'organe de support (7) de sa configuration de repos à sa configuration de service.

10. Dispositif (1) selon l'une des revendications 1 à 9 **caractérisé en ce qu'**il comprend un deuxième moyen de commande (13) conçu pour être actionné par un utilisateur afin de permettre à ce dernier de commander le passage du moyen d'attache (6) de sa configuration de libération à sa configuration d'attache, ledit deuxième moyen de commande (13) étant distinct du premier moyen de commande (10).

11. Dispositif (1) selon l'une des revendications 1 à 10 **caractérisé en ce que** le moyen d'attache (6) est conçu pour évoluer, par variation de son encombrement selon la direction transversale (Y-Y') définie relativement à la direction longitudinale (X-X') d'extension du rail (2), entre d'une part une configuration rétractée lui permettant d'être inséré par une ouverture (3) ménagée à la surface du rail (2) et d'autre part une configuration déployée qui interdit l'extraction du moyen d'attache (6) par ladite ouverture (3).

12. Dispositif (1) selon la revendication 11 **caractérisé en ce qu'**il comprend un moyen de réglage de la position du moyen d'attache (6) selon la direction verticale (Z-Z') perpendiculaire à la fois à la direction longitudinale (X-X') d'extension du rail et à ladite direction transversale (Y Y').

13. Dispositif (1) selon l'une des revendications 1 à 12 **caractérisé en ce qu'**il constitue un dispositif d'accouplement (1) à un rail (2) embarqué dans un aéronef.

## Claims

1. A coupling device (1) for coupling to a rail (2) on board a vehicle, said device (1) comprising:
- attachment means (6) capable of varying between firstly an attachment configuration in which the attachment means (6) are designed to attach the coupling device (1) to the rail (2), and secondly a release configuration in which the attachment means (6) are designed to allow said coupling device (1) and said rail (2) to be separated;
- a support member (7) designed to vary between firstly an in-use configuration in which it is designed to be in contact with the rail (2) to support substantially at least a fraction of the weight of said coupling device (1) while allowing it to move along the rail (2), and secondly a rest configuration in which it substantially does not support the weight of said coupling device (1), the attachment means (6) and the support member (7) being designed to move between their respective configurations independently of each other; and
- a main body (5) carrying the attachment means (6) and the support member (7) ;
said device (1) being **characterized in that** the support member (7) is mounted to move relative to the main body (5) between a rest position, corresponding to the rest configuration, and an in-use position corresponding to the in-use configuration.

2. A device (1) according to claim 1, **characterized in that** the support member (7) is designed to support substantially all of the weight of the coupling device (1) when in the in-use configuration.

3. A device (1) according to claim 1 or claim 2, **characterized in that** said support member (7) comprises at least one wheel (7A, 7B, 7C, 7D) so that the coupling device (1) can run on the rail (2) when the support member (7) is in the in-use configuration.

4. A device (1) according to any one of claims 1 to 3, **characterized in that** the support member (7) is mounted to move in translation on the main body (3) between its rest and in-use positions.

5. A device (1) according to claims 3 and 4, **characterized in that** the support member (7) comprises at least one carriage (8, 9) mounted to move in translation on the main body (5) between a retracted position corresponding to the rest position and an extended position corresponding to the in-use position, said device (1) including a pivotable cam (11, 12) cooperating with the carriage (8, 9) to cause it to move between its retracted and extended positions.

6. A device (1) according to any one of claims 1 to 5, **characterized in that** the main body (5) is designed to rest on the rail (2) when the support member (7) is designed, on passing from its rest position to its in-use configuration, to exert a force on the rail (2) that enables the main body to be moved apart from the rail (2).

7. A device (1) according to any one of claims 1 to 7, **characterized in that** includes an immobilizer element (16) designed to vary between firstly a blocking position in which it is designed to engage in an opening (3A) formed in the surface of the rail (2) substantially to prevent any movement in translation of the device (1) parallel to the mean plane in which the longitudinal extension direction (X-X') of the rail (2) lies, and secondly a disengaged position in which it is situated outside said opening (3A) to enable the device (1) to move in translation at least in the longitudinal direction (X-X') in which the rail (2) extends.

8. A device (1) according to claim 7, **characterized in that** the immobilizer element (16) is secured to the main body (5) in such a manner that when the support member (7) is in the rest position, the immobilizer element (16) adopts its blocking position, and when the support member (7) is in its In-use position, the immobilizer element (16) adopts its disengaged position.

9. A device (1) according to any one of claims 1 to 8, **characterized in that** it includes first control means (10) designed to be actuated by a user to enable the user to cause the support member (7) to pass from its rest configuration to its in-use configuration.

10. A device (1) according to any one of claims 1 to 9, **characterized in that** it includes second control means (13) designed to be actuated by a user in order to enable the user to cause the attachment means (6) to pass from their release configuration to their attachment configuration, said second control means (13) being distinct from the first control means (10).

11. A device (1) according to any one of claims 1 to 10, **characterized in that** the attachment means (6) are designed, by varying their size in the transverse direction (Y-Y') defined relative to the longitudinal direction (X-X') in which the rail (2) extends, to vary between firstly a retracted configuration, enabling it to be inserted through an opening (3) formed in the surface of the rail (2), and secondly a deployed configuration preventing the attachment means (6) to be extracted through said opening (3).

12. A device (1) according to claim 11, **characterized in that** it includes adjustment means for adjusting the position of the attachment means (6) in the vertical direction (Z-Z') perpendicular both to the longitudinal direction (X-X') in which the rail extends and to said transverse direction (Y-Y').

13. A device (1) according to any one of claims 1 to 12, **characterized in that** it constitutes a device (1) for coupling to a rail (2) on board an aircraft.

## Patentansprüche

1. Vorrichtung (1) zum Kuppeln mit einer Schiene (2) die in einem Fahrzeug mitgeführt wird, wobei die Vorrichtung (1) Folgendes aufweist:
- ein Befestigungsmittel (6), das sich zwischen einerseits einer Befestigungskonfiguration, in der das Befestigungsmittel (6) konzipiert ist, um die Kupplungsvorrichtung (1) an der Schiene (2) zu befestigen, und andererseits einer Freigabekonfiguration, die konzipiert ist, um das Trennen der Kupplungsvorrichtung (1) und der Schiene (2) zu gestatten, bewegen kann,
- ein Tragelement (7), das konzipiert ist, um sich zwischen einerseits einer Servicekonfiguration, in der es dazu bestimmt ist, mit der Schiene (2) in Berührung zu sein, um im Wesentlichen mindestens einen Bruchteil des Gewichts der Kupplungsvorrichtung (1) zu tragen und gleichzeitig eine Verlagerung dieser Letzteren entlang der Schiene (2) zu erlauben, und andererseits einer Ruhekonfiguration, in der es das Gewicht der Kupplungsvorrichtung (1) im Wesentlichen nicht trägt, bewegen kann, wobei das Befestigungsmittel (6) und das Tragelement (7) konzipiert sind, um sich voneinander unabhängig zwischen ihren jeweiligen Konfigurationen zu bewegen,
- einen Hauptkörper (5), der das Befestigungsmittel und das Tragelement (7) trägt,
Vorrichtung (1) **dadurch gekennzeichnet, dass** das Tragelement (7) in Bezug zu dem Hauptkörper (5) zwischen einer Ruheposition, die der Ruhekonfiguration entspricht, und einer Serviceposition, die der Servicekonfiguration entspricht, beweglich montiert ist.

2. Vorrichtung (1) nach Anspruch 1, **dadurch gekennzeichnet, dass** das Tragelement (7) konzipiert ist, um im Wesentlichen das gesamte Gewicht der Kupplungsvorrichtung (1) zu tragen, wenn es in der Servicekonfiguration ist.

3. Vorrichtung (1) nach Anspruch 1 oder 2, **dadurch gekennzeichnet, dass** das Tragelement (7) mindestens ein Rad (7A, 7B, 7C, 7D) aufweist, damit die Kupplungsvorrichtung (1) auf der Schiene (2) rollen kann, wenn sich das Tragelement (7) in Servicekonfiguration befindet.

4. Vorrichtung (1) nach einem der Ansprüche 1 bis 3, **dadurch gekennzeichnet, dass** das Tragelement (7) auf den Hauptkörper (5) zwischen seiner Ruheposition und einer Serviceposition in Verschiebung montiert ist.

5. Vorrichtung (1) nach den Ansprüchen 3 und 4, **dadurch gekennzeichnet, dass** das Tragelement (7) mindestens einen Wagen (8, 9) aufweist, der auf dem Hauptkörper (5) zwischen einer eingezogenen Position, die der Ruheposition entspricht, und einer ausgefahrenen Position, die der Serviceposition entspricht, in Verschiebung montiert ist, wobei die Vorrichtung (1) einen Drehnocken (11, 12) aufweist, der mit dem Wagen (8, 9) zusammenwirkt, um diesen Letzteren zwischen seiner eingezogenen und seiner ausgefahrenen Position zu bewegen.

6. Vorrichtung (1) nach einem der Ansprüche 1 bis 5, **dadurch gekennzeichnet, dass** der Hauptkörper (5) konzipiert ist, um auf der Schiene (2) aufzuliegen, wenn das Tragelement (7) in Ruhekonfiguration ist, wobei das Tragelement (7) konzipiert ist, um auf die Schiene (2), wenn es von seiner Ruheposition zu seiner Serviceposition übergeht, eine Kraft auszuüben, die es erlaubt, den Hauptkörper von der Schiene (2) zu beabstanden.

7. Vorrichtung (1) nach einem der Ansprüche 1 bis 7, **dadurch gekennzeichnet, dass** sie ein Stillstellelement (16) aufweist, das konzipiert ist, um sich einerseits zwischen einer Blockierungsposition, in der es dazu bestimmt ist, sich in eine Öffnung (3A), die in der Oberfläche der Schiene (2) eingerichtet ist, einzufügen, um im Wesentlichen jede Verschiebungsbewegung der Vorrichtung (1) parallel zu der mittleren Ebene, in die die Längsausdehnungsrichtung (X-X') der Schiene (2) fällt, zu verhindern, und andererseits einer Ausrastposition, in der es dazu bestimmt ist, sich außerhalb der Öffnung (3A) zu befinden, um eine Verschiebungsbewegung der Vorrichtung (1) mindestens entlang der Längsausdehnungsrichtung (X-X') der Schiene (2) zu erlauben, zu bewegen.

8. Vorrichtung (1) nach Anspruch 7, **dadurch gekennzeichnet, dass** das Stillstellelement (16) fest mit dem Hauptkörper (5) derart verbunden ist, dass das Stillstellelement (16), wenn das Tragelement (7) in Ruheposition ist, seine Blockierungsposition einnimmt, und, wenn das Tragelement (7) in Serviceposition ist, das Stillstellelement (16) seine Ausrastposition einnimmt.

9. Vorrichtung (1) nach einem der Ansprüche 1 bis 8, **dadurch gekennzeichnet, dass** sie ein erstes Steuermittel (10) aufweist, das konzipiert ist, um von einen Benutzer betätigt zu werden, um es diesem Letzteren zu erlauben, das Übergehen des Tragelements (7) von seiner Ruhekonfiguration zu seiner Servicekonfiguration zu steuern.

10. Vorrichtung (1) nach einem der Ansprüche 1 bis 9, **dadurch gekennzeichnet, dass** sie ein zweites Steuermittel (13) aufweist, das konzipiert ist, um von einem Benutzer betätigt zu werden, um es diesem Letzteren zu erlauben, das Übergehen des Befestigungsmittels (6) von seiner Freigabekonfiguration zu seiner Befestigungskonfiguration zu erlauben, wobei das zweite Steuermittel (13) von dem ersten steuermittel (10) getrennt ist.

11. Vorrichtung (1) nach einem der Ansprüche 1 bis 10, **dadurch gekennzeichnet, dass** das Befestigungsmittel (6) konzipiert ist, um sich durch Variationen seines Platzbedarfs entlang der Richtung (Y-Y'), die in Bezug zu der Längsausdehnungsrichtung (X-X') der Schiene (2) definiert ist, zwischen einerseits einer eingezogenen Konfiguration, die es ihm erlaubt, durch eine Öffnung (3), die in der Oberfläche der Schiene (2) eingerichtet ist, eingefügt zu werden, und andererseits einer ausgefahrenen Konfiguration, die das Herausziehen des Befestigungsmittel (6) durch die Öffnung (3) untersagt, zu bewegen.

12. Vorrichtung (1) nach Anspruch 11, **dadurch gekennzeichnet, dass** sie ein Einstellmittel der Position des Befestigungsmittels (6) entlang der vertikalen Richtung (Z-Z') senkrecht sowohl zu der Längsausdehnungsrichturg (X-X') der Schiene als auch zu der Drehrichtung (Y-Y') aufweist.

13. Vorrichtung (1) nach einem der Ansprüche 1 bis 12, **dadurch gekennzeichnet, dass** sie eine Kupplungsvorrichtung (1) mit einer Schiene (2), die in einem Luftfahrzeug mitgeführt wird, bildet.
